# EUROPÄISCHE PATENTSCHRIFT

(11) **EP 1 875 168 B1**
(45) Veröffentlichungstag und Bekanntmachung des Hinweises auf die Patenterteilung: **20.07.2016**
(21) Anmeldenummer: 06725571.1
(22) Anmeldetag: 05.04.2006
(51) Int. Cl.: G01C 21/36, G06F 3/023, G06F 17/30, G06F 17/24, G11B 27/34, G06F 3/0489, G06F 17/27

(54) **VERFAHREN ZUR AUSWAHL VON ELEMENTEN IN EINEM FAHRERINFORMATIONS- ODER EINEM NAVIGATIONSSYSTEM ODER EINEM MOBILEN ENDGERÄT**
PROCESS FOR SELECTING ELEMENTS IN A DRIVER INFORMATION OR NAVIGATION SYSTEM, OR IN A MOBILE TERMINAL
PROCEDE DE SELECTION D'ELEMENTS DANS UN SYSTEME D'INFORMATION CONDUCTEUR OU DE NAVIGATION OU UN TERMINAL MOBILE

(30) Priorität: 21.04.2005 DE 102005018467
(43) Veröffentlichungstag der Anmeldung: 09.01.2008
(73) Patentinhaber: ROBERT BOSCH GMBH, 70442 Stuttgart (DE)
(72) Erfinder: LUNGWITZ, Thomas, 70180 Stuttgart (DE); LUEER, Stefan, 31137 Hildesheim (DE); SCHLOEGL, Dietmar, 31079 Sibbesse (DE); KERSKEN, Ulrich, 31199 Diekholzen (DE); WETTSTEIN, Horst, 76227 Karlsruhe (DE); GUELZOW, Thomas, 70825 Korntal-Muenchingen (DE); KLEINE-BESTEN, Thomas, 38116 Braunschweig (DE)
(86) Internationale Anmeldenummer: PCT/EP2006/061341
(87) Internationale Veröffentlichungsnummer: WO 2006/111471

(56) Entgegenhaltungen:
- EP-A- 1 300 776
- EP-A- 1 653 378
- US-A- 5 072 395
- US-A1- 2002 089 529

## Beschreibung

Die vorliegende Erfindung betrifft ein Verfahren zur Zielauswahl in einem Navigationssystem, bei dem jedes Ziel aus einer Gesamtheit aller Ziele durch Zielparameter definiert ist. Beispiele dafür sind die Zielauswahl in einem Navigationssystem oder eine Liederauswahl auf einem iPOD (Abspielgerät mit Speicher für komprimierte Audiodateien, insbesondere Musikstücke) oder Smart Phone.

In den letzten Jahren sind Navigationssysteme zur Unterstützung des Fahrers eines Kraftzeuges immer üblicher geworden und gehören inzwischen vielfach zur Standardausrüstung eines neuen Kraftfahrzeuges. Damit ein Navigationssystem eine Route berechnen kann, müssen Anfangspunkt und Endpunkt bzw. Start und Ziel einer Fahrtroute festgelegt werden. Der Start kann dabei üblicherweise der aktuellen Position des Fahrzeugs entsprechen und ist entweder über ein automatisiertes Positioniersystem bestimmbar oder die Startposition kann von dem Benutzer des Navigationssystems eingegeben werden. Das Ziel wir üblicherweise stets eingegeben. Die Eingabe eines Zieles in das Navigationssystem erfolgt dabei durch den Benutzer mit Hilfe einer Eingaberoutine, die in einer Software implementiert ist. Die Eingaberoutine muss u.a. die Eigenschaften der Eindeutigkeit, der Bedienbarkeit und der technischen Machbarkeit aufweisen.

Die EP 1 300 776 A1 betrifft ein computerimplementiertes, kontextsensitives Verfahren zum Auffinden und Abrufen von Datenbankereignissen aus beliebig strukturierten Datensätzen. Bei diesem Verfahren wird eine Zeichenkette in ein Eingabefeld eingegeben oder verändert und darauf an einen Suchalgorithmus zum Durchsuchen einer Datenbank übergeben. Die Suchergebnisse werden in identischer oder approximativer Näherung in Form einer Kandidatenliste ausgegeben, wobei unmittelbar nach Eingabe einer Zeichenkette in das Eingabefeld eine Bereitstellung einer Kandidatenliste mit naheliegenden Kandidaten für das aktuelle Eingabefeld in einem Kandidatenfeld erfolgt und eine Vorschlagsliste für die Zeichenkette in einem Vorschlagsfeld bereitgestellt wird. Die Bestimmung einer Kontexteinschränkung findet durch Auswahl, entweder im bereitgestellten Kandidatenfeld oder im bereitgestellten Vorschlagsfeld, statt. Abschließend werden die Eingabefelder mit den entsprechenden Ergebnissen aufgefüllt, worauf Teil- oder Vollvorschläge innerhalb des Vorschlagsfeldes unter Nutzung aller Informationen der vorher erzielten Kandidatenliste ausgegeben werden.

Die US 5,072,395 betrifft ein Navigationssystem für die Anwendung mit einem bewegten Objekt, wobei das Navigationssystem gespeicherte Informationen über mögliche Zieldaten umfasst. Die Information für jeden möglichen Zielort umfasst eine Vielzahl von Informationsfeldern und das Navigationssystem beinhaltet weiter Mittel zur Spezifikation der gewünschten Zielinformation durch den Nutzer. Diese umfassen ein Anzeigemittel zum Anzeigen von Informationen und ein erstes Mittel zur Eingabe von Benutzerbefehlen, was dazu führt, dass die ausgewählten Informationen betreffend eines Informationsfeldes auf dem Anzeigemittel angezeigt werden. Ein zweites Mittel zur Eingabe dient einer weiteren Eingabe von Benutzerbefehlen, was dazu führt, dass die ausgewählten Informationen betreffend eines weiteren Informationsfeldes nachfolgend auf dem Anzeigemittel angezeigt werden. Die Informationen werden über ein Steuermittel eingeschränkt, welches mit dem ersten und dem zweiten Eingabemittel in Verbindung steht. Dabei werden die Informationen zur Anzeige auf dem Anzeigemittel durch das zweite Eingabemittel aus einem ersten im Navigationssystem gespeicherten Informationssatz ausgewählt. Dieser wird dann auf einen zweiten kleineren Satz Informationen eingeschränkt, der als zumindest teilweise Funktion der durch das erste Eingabemittel ausgewählten Informationen vorliegt.

Die US 2002/0089529 A1 betrifft ein maschinenlesbares Medium, das einen Anwendungs-Quell Code eines Media Players enthält und das nachfolgende Verfahren implementiert. Zunächst wird in einer Benutzerschnittstelle ein Bedienungsfenster generiert, welches einen Fensterrahmen und eine Vielzahl an Trennstreifen aufweist, die eine Vielzahl von Fenstern innerhalb des Rahmens definieren. In einem ersten der definierten Fenster wird ein vom Benutzer auswählbares Verzeichnis einer Vielzahl von Mediendaten angezeigt. In einem zweiten der Fenster werden erste ausgewählte Informationen zu den Mediendaten und in einem dritten Fenster zweite ausgewählte Informationen zu den Mediendaten angezeigt. Bei Eingabe eines Suchbegriffs wird das Verzeichnis für jedes eingegebene Zeichen auf die Mediendaten eingeschränkt, die den Suchbegriff beinhalten.

Die nachveröffentlichte EP 1 653 378 A2 betrifft ein Verfahren zur Eingabe und Durchführung einer Suche nach geographischen Informationen. Eine geographische Datenbank wird bereitgestellt, die eine Vielzahl von nicht hierarchisch indexierten Datentabellen enthält. Es werden Suchfelder bereitgestellt, die sich auf jede der Datentabellen beziehen und relativ zueinander nicht sequentiell vorliegen. Teilweise oder vollständige Informationen werden in ein oder mehrere Suchfelder eingegeben, wobei die Eingabe nicht sequentiell durchgeführt werden muss. Dabei führt die Eingabe von teilweisen Informationen in eines der Suchfelder zu einem nicht aufgelösten Feld und die Eingabe vollständiger Informationen in eines der Suchfelder zu einem aufgelösten Feld. Die geographische Datenbank wird nach Informationen durchsucht, die mit beiden, den nicht aufgelösten und aufgelösten, Feldern übereinstimmen und ein oder mehrere Ergebnisse werden abgerufen, die jeweils Informationen beinhalten, die in das nicht aufgelöste und aufgelöste Feld eingegeben wurden.

Bei der Zielauswahl werden von dem Benutzer Informationen über das Ziel erwartet. Diese Informationen werden mit Zielparameter bezeichnet. Beispiele für Zielparameter sind unter anderem Staatsname bzw. Landesname, Stadtname, Stadtteilname, Straßenname und Hausnummer. Weitere Zielparameter können beispielsweise die Postleitzahl, die amtliche Telefonvorwahl und/oder die Telefonnummer des Endteilnehmers sein.

Hierbei müssen nicht alle bei einem Navigationssystem vorgesehenen Zielparameter dem System bekannt sein, um ein Ziel eindeutig auswählen zu können. Welche Zielparameter vom Benutzer abgefragt werden, ist in den verschiedenen Ländern unterschiedlich und hängt von den landesspezifischen Eigenheiten ab. In der Bundesrepublik Deutschland genügt üblicherweise die Bezeichnung der Stadt, der Straße und der Hausnummer. Dies entspricht der postalischen Adressierung und diese Angabe wird der Benutzer im Allgemeinen liefern können. Lediglich bei Mehrdeutigkeiten, wenn beispielsweise ein Stadtname mehrere Städte in unterschiedlichen Gebieten bezeichnet, sollte das System dies erkennen und den Nutzer um Zusatzinformationen bitten, beispielsweise um die Anfangsziffern der Postleitzahl oder einen Stadtteilnamen.

In der Bundesrepublik Deutschland führt diese Vorgehensweise deshalb zum Erfolg, weil hier postalische Adressierung und politische Unterteilung stets zusammenpassen. Anders sieht es beispielsweise in den Vereinigten Staaten von Amerika aus. Dort kann eine Diskrepanz von postalischen und politischen Namen für ein und dieselbe Ortschaft auftreten oder Straßen können sich mit unverändertem Namen und fortlaufender Hausnummerierung über mehrere Ortschaften erstrecken. Dies führt dann dazu, dass in solchen Fällen dem Benutzer der Name der Stadt, in dem das Ziel sich befindet, nicht exakt bekannt ist. Der Benutzer ist jedoch in der Lage, Straßennamen und Hausnummer anzugeben.

Üblicherweise erfolgt die Auswahl eines Fahrzieles manuell zeichenweise über eine Eingabevorrichtung. Hierbei ist oftmals echtes Eintippen über Tasten oder Anklicken bzw. Auswählen von bildhaften Vorgaben möglich. Die Zielparameter werden einzeln nacheinander vollständig präsentiert, beispielsweise wird zuerst die Ortsbezeichnung, anschließend der Straßenname und abschließend die Hausnummer spezifiziert.

Meist jedoch wird der Bediener unter Berücksichtigung der erlaubten Namen so geführt, dass Falscheingaben möglichst vermieden werden. Dies erfolgt durch stellenweises Vorgeben der jeweils noch möglichen Fortsetzzeichen. Das freie Schreiben wird somit durch ein Auswählen aus einer mitlaufenden Auswahlmenge ersetzt. Diese Vorgehensweise der Zeicheneingabe wird als "Automatic Spelling Function" (ASF) bezeichnet.

Es sind Eingaberoutinen bekannt, bei denen die Reihenfolge der Zielparameter bei der Eingabe variiert werden kann. Es ist jedoch bei diesen Routinen erforderlich, dass jeweils ein Zielparameter vollständig bzw. eindeutig eingegeben werden muss, bevor der nächste Zielparameter ausgewählt werden kann. Auch ist die Reihenfolge der Parameter üblicherweise nicht frei wählbar, sondern durch die Eingaberoutine vorgegeben. So lassen derartige Eingaberoutinen tatsächlich keine freie Wahl zu, sondern sie bieten nur mehrere, dann jedoch fest vorgegebene Reihenfolgen der Zielparameterauswahl an.

Vor diesem Hintergrund ist es die Aufgabe der vorliegenden Erfindung, ein verbessertes Verfahren zur Auswahl eines Eintrags aus einer Menge von Einträgen zur Auswahl eines Elements aus einer Menge von Elementen, beispielsweise zur Zielauswahl in einem Navigationssystem anzugeben, durch welches dem Benutzer eine einfache und zügige Eingabe der Zielparameter ermöglicht wird.

Diese Aufgabe wird durch ein Verfahren mit den Merkmalen des Anspruchs 1 gelöst.

In Informationssystemen oder Datenbanken liegen immer mehr Inhalte/Begriffe vor, die über Eingaberoutinen der Benutzer-Maschinen-Schnittstelle ausgewählt werden können. Diese Inhalte bzw. Elemente sind durch Parameter beschrieben und können aus der Gesamtheit der Begriffe durch die Eingabe der Parameter eindeutig identifiziert werden. Weiterhin sind verschiedenste mobile Endgeräte auf dem Markt die z.B. als Musikserver, Videoserver oder allgemein als Speicher für Datensätze z.B. Adressen genutzt werden. Damit ein mobiles Endgerät z.B. ein Lied spielen kann muss der Liedtitel und bei Mehrdeutigkeit auch der Interpret eingegeben werden. Dies kann durch Auswahl aus einer Liste erfolgen oder durch die buchstabenweise Eingabe. Beispiele für diese Inhalte/Elemente sind
- Audiodateien (bei Musikstücken: Interpret, Titel, Komponist, Musikart,...)
- Videodateien,
- Datensätze (Zielspeicher, Adressen, ...),
- Points of Interest,
- Reiseführerinformationen (Campingplätze, Museen, Hotels, Restaurants, historische Gebäude oder Begebenheiten,....),
- Kunstwerke (Künstler, Name des Kunstwerkes, Jahr der Fertigstellung, Epoche, Kunstgattung,...),
- Office (Emails, Dateien,...),
- Einkaufsführer (Schnäppchenführer, Factory-Outlets, ... )
- Gelbe Seiten/Branchenbuch.

Erfindungsgemäß ist bei einem gattungsgemäßen Verfahren vorgesehen, dass bei dem Eingeben einzelner Zeichen für jeweils einen Parameter eine Menge der möglichen Elemente aus der Gesamtheit der Elemente schrittweise eingeschränkt wird und bei dem Eingeben der Zeichen von einem Parameter zu einer Eingabe eines Zeichens für einen anderen Parameter gewechselt werden kann, ohne dass der erste Parameter eindeutig ist bzw. komplett eingegeben wurde und dass durch das Eingeben eines Zeichens für einen Parameter automatisch ein bzw. mehrere Folgezeichen auch bei den entstehenden Zeichenketten der anderen Parameter hinzugefügt werden, wenn als Folge der gegenseitigen Einschränkung dort ebenfalls eine Eindeutigkeit eintritt und dass bei einem Zurücknehmen der Eingabe eines Zeichens die durch das zurückgenommene Zeichen bewirkte Einschränkung der Auswahlmenge und der Zeichenkettenergänzung bei allen Parametern rückgängig gemacht wird.

Wesentliche Idee des Verfahrens ist, dass der Benutzer mit der Eingabe eines Zielparameters beginnen kann, unabhängig davon, ob bisherige Eingaben für andere Zielparameter abgeschlossen sind oder nicht. Der Benutzer kann beispielsweise für den Stadtnamen und den Straßennamen nur wenige Anfangszeichen eingeben, um das Ziel auszuwählen. Ein großer Vorteil des erfindungsgemäßen Verfahrens liegt darin, dass der Benutzer bei Unkenntnis der exakten Schreibweise eines Zielparameters durch die nur teilweise Eingabe verschiedener Zielparameter die möglichen Ziele reduzieren und einschränken kann. Der Benutzer hat somit die Möglichkeit, sich bei der Eingabe des Zieles schrittweise voranzutasten. Auch ist der Benutzer nicht an eine festgelegte Eingabereihenfolge der Zielparameter gebunden, sondern kann die ihm beispielsweise von Briefadressen vertraute Reihenfolge wählen oder mit dem Zielparameter anfangen, den er genau und sicher kennt. Erfindungsgemäß werden nach dem Eingeben eines Zeichens für einen Zielparameter ein bzw. mehrere Folgezeichen automatisch ergänzt, wenn für den laufenden Namensabschnitt Eindeutigkeit vorliegt. Dies gilt auch, wenn als Folge der gegenseitigen Einschränkung bei anderen Zielparametern ebenfalls eine lokale Eindeutigkeit eintritt. Durch die Rücknahme wird ermöglicht, dass mögliche Eingabefehler derart korrigiert werden können, dass sie keine Auswirkung auf die Fortsetzung des Auswahlverfahrens haben. Diese Rücknahme erfolgt ebenfalls bei anderen Zielparametern.

Bei einer vorteilhaften Ausführung des erfindungsgemäßen Verfahrens ist vorgesehen, dass nach dem Eingeben eines Zeichens für einen Zielparameter ein bzw. mehrere Folgezeichen automatisch ergänzt werden, wenn für den laufenden Namensabschnitt Eindeutigkeit vorliegt. Dies gilt auch, wenn als Folge der gegenseitigen Einschränkung bei anderen Zielparametern ebenfalls eine lokale Eindeutigkeit eintritt.

Die Aufgabe wird weiter gelöst durch ein Fahrerinformations- oder Navigationssystem oder mobiles Endgerät zur Durchführung des Verfahrens mit einer Eingabeeinrichtung zur Eingabe von Zeichen, einem Speicher, in dem eine Gesamtheit von Elementen gespeichert sind, wobei den oder einer Mehrzahl von Elementen jeweils mindestens zwei Parameter zugeordnet sind, und einer Steuerung, die dazu ausgebildet ist, beim Eingeben einzelner Zeichen für jeweils einen Parameter eine Menge der möglichen Elemente aus der Gesamtheit der Elemente schrittweise einzuschränken und die es ermöglicht, bei dem Eingeben der Zeichen von einem Parameter zu einer Eingabe eines Zeichens für einen anderen Parameter zu wechseln, unabhängig davon, ob bisherige Eingaben für andere Parameter abgeschlossen sind oder nicht und die es ermöglicht, bei einem Zurücknehmen der Eingabe eines Zeichens die durch das zurückgenommene Zeichen bewirkte Einschränkung der Auswahlmenge und der Zeichenkettenergänzung bei allen Parametern rückgängig zu machen.

Wenngleich die nachfolgende Beschreibung hauptsächlich auf die Eingabe eines Ziels in ein Navigationsgerät ausgerichtet ist, bedeutet dies jedoch keine Einschränkung der Erfindung auf diesen konkreten Anwendungsfall. Vielmehr ist die Erfindung, wie bereits dargelegt, analog auch auf andere Eingaben an anderen Geräten anwendbar.

Ein weiterer Vorteil des erfindungsgemäßen Verfahrens ist, dass die Eingaberoutine nicht bei jeder Erweiterung des Navigationsgebietes an nationale Eigenheiten bei der Eingabe von Adressen angepasst werden muss. Hierdurch wird ein Navigationssystem mit einer Eingaberoutine ermöglicht, die unabhängig von länderspezifischen Besonderheiten der Adressierung ist.

Bevorzugt wird bei dem Eingeben der Zeichen durch den Wechsel zwischen mehreren Zielparametern die Anzahl der Eingabeschritte bis zur eindeutigen Auswahl reduziert. Die Reduzierung der Eingabeschritte nutzt die Tatsache, dass Orte und Straßen nicht in zufälliger Beziehung zueinander stehen. Häufig dienen lokale geografische Gegebenheiten oder örtlich verdiente Persönlichkeiten als Namensgeber für Straßen. Dies hat zur Folge, dass viele Straßennamen nur in wenigen benachbarten Orten oder im günstigsten Fall nur in einem einzigen Ort vorkommen.

Vorzugsweise existiert bei jedem Zielparameter eine Auswahlmenge, die durch das Eingeben der Zeichen mitlaufend angepasst wird. Die eingeschränkten Auswahlmengen mehrerer Zielparameter werden zudem derart miteinander verknüpft, dass eine Einschränkung der Auswahlmenge eines Zielparameters die Auswahlmengen der anderen Zielparameter ebenfalls einschränkt.

Ein weiterer wesentlicher Vorteil ist, dass die Berücksichtigung der zwischen den Zielparametern bestehenden Beziehung deren Verträglichkeit immer garantiert, d.h. dass beispielsweise keine Straßennamen eingegeben werden können, die in einem eingegebenen Ort nicht existieren.

Eine vorteilhafte Weiterführung des erfindungsgemäßen Verfahrens sieht vor, dass bei Unterschreitung einer vorbestimmten Anzahl der noch möglichen Ziele diese in einer Auflistung, beispielsweise auf einem Display, angezeigt werden. Hierdurch wird ermöglicht, dass bei einer für den Benutzer überschaubaren Anzahl der möglichen Ziele einfach und zügig eine Endauswahl vorgenommen werden kann, in dem der Benutzer das Ziel aus der Liste direkt auswählt. Bei der erfindungsgemäßen Eingabe ist es zweckmäßig, alle Zielparameter anzuzeigen. Wählt man dann eine zusammengehörende Gruppe von Zielparametern aus, dann ist auch bei der Listenauswahl die Verträglichkeit der Parameter gesichert.

Bevorzugt können Zielparameter eine Staatsbezeichnung, ein Stadtname, ein Straßenname, eine Hausnummer, eine Postleitzahl, eine Telefonvorwahl und/oder eine Telefonnummer sein. Weitere mögliche Zielparameter können die Angabe eines Bundeslandes, eines Stadtteilnamens oder die Angabe einer Gebäudefunktion sein, beispielsweise Rathaus, Stadthalle, Apotheke oder Polizeipräsidium. Es ist klar, dass der Begriff Stadtname alle Ortschaften unabhängig von der jeweiligen Größe einschließt.

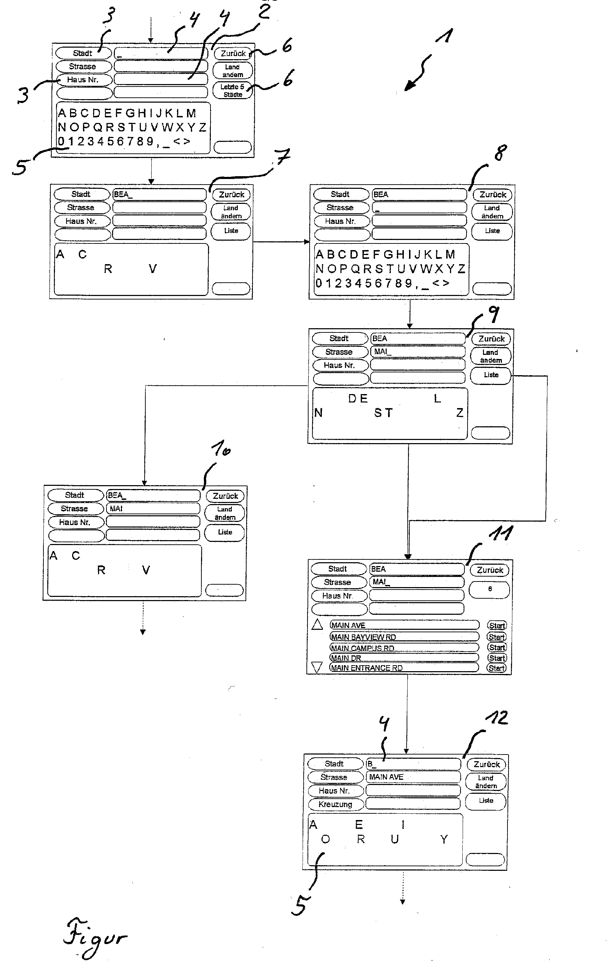

Nachfolgend wird ein Ausführungsbeispiel des erfindungsgemäßen Verfahrens anhand der beigefügten Zeichnung beispielhaft näher erläutert. Die einzige Figur zeigt ein erstes Eingabebeispiel anhand eines Ablaufdiagramms 1 für eine Anzeige eines Navigationssystems, bei dem jeweils unterschiedliche Eingabefortschritte verschiedener Zielparameter dargestellt sind. Die Eingaberoutine beginnt bei der Anzeige 2, bei der noch keine Eingabe erfolgt ist. Die Anzeige 2 weist in ihrem linken Bereich Felder 3 mit zur Verfügung stehenden Zielparametern untereinander aufgelistet auf. In dem gezeigten Beispiel sind als Zielparameter die Stadt, die Straße und die Hausnummer bzw. Haus Nr. vorgesehen.

Rechts neben den Feldern 3 der Zielparameter befindet sich jeweils ein Eingabefeld 4, von denen in der Anzeige 2 noch keins einen Eintrag aufweist. In einem der Eingabefelder 4 ist durch einen Unterstrich, beispielsweise einen blinkenden Cursor, die Position angegeben, für die das System eine Eingabe eines Zeichens erwartet. Unter den Feldern 3 der Zielparameter und den Eingabefeldern 4 befindet sich ein Zeichenfeld 5 mit einer Liste der zur Verfügung stehenden Zeichen für die nächste Eingabe an der Cursorposition. Ferner sind in der Anzeige 2 weitere Steuerungs- und Funktionstasten 6 vorgesehen, beispielsweise um die zuletzt erfolgte Eingabe zu widerrufen (Zurück) oder ein anderes Land bzw. ein anderes Gebiet auszuwählen (Land ändern).

In der Anzeige 7 ist ein Eingabefortschritt angezeigt, bei dem bereits die ersten drei Buchstaben "BEA" der Stadt eingegeben wurden. Die Liste der zur Verfügung stehenden Zeichen ist derart eingeschränkt, dass nur eine sinnvolle weitere Zeicheneingabe für die Stadtbezeichnung möglich ist.

In der in der Anzeige 8 wiedergegebenen Situation wurde zu der Eingabe des Zielparameters Straße gewechselt, was durch die veränderte Cursorposition zu erkennen ist. Die Eingabe der Stadt ist zu diesem Zeitpunkt jedoch noch nicht vollständig und eindeutig abgeschlossen, d.h. es sind noch mehrere Ziele in verschiedenen Städten möglich. Zur Eingabe des ersten Zeichens des Straßennamens steht dem Benutzer wieder der vollständige Zeichensatz zur Verfügung, wie der Anzeige 8 in der Figur zu entnehmen ist.

In der Anzeige 9 ist der Eingabefortschritt dargestellt, bei der der Benutzer die Straße durch Eingabe der ersten drei Buchstaben "MAI" bereits eingeschränkt hat. Zur weiteren Eingabe stehen ihm nur noch bestimmte Zeichen zur Verfügung, die eine sinnvolle und zulässige Eingabe ermöglichen.

Für den weiteren Eingabefortschritt kann der Benutzer wieder zurück zur genaueren Spezifizierung der Stadt wechseln, wie in der Anzeige 10 durch die veränderte Cursorposition gezeigt ist. Alternativ kann sich der Benutzer in der mit der Anzeige 9 wiedergegebenen Situation durch Betätigen des Funktionsfeldes 6 "Liste" eine Auflistung der möglichen und zulässigen Straßennamen anzeigen lassen. Dies ist in der Anzeige 11 dargestellt, in der untereinander die zulässigen Straßennamen aufgelistet sind, aus denen die gewünschte Straße direkt ausgewählt werden kann.

Unterschreitet die Anzahl der Elemente der möglichen Ziele einen system- und anzeigebedingten Schwellenwert, kann dem Benutzer automatisch, also ohne Anforderung durch die Betätigung des Funktionsfeldes 6, direkt die Liste der zulässigen und möglichen Ziele in einem unteren Bereich der gezeigten Anzeige 11 dargestellt werden.

Nach direkter Auswahl des Straßennamens "MAIN AVE" in diesem Beispiel hat der Benutzer in der mit der Anzeige 12 wiedergegebenen Situation erneut die Cursorposition in das Eingabefeld 4 für den Zielparameter Stadt gewechselt. Dort hat er ferner den zweiten und dritten Buchstaben der Eingabe zurückgenommen bzw. gelöscht. Dem Benutzer werden nun in dem Zeichenfeld 5 alle zur Verfügung stehenden Zeichen für eine zulässige Weiterführung der Eingabe des Zielparameters Stadt angezeigt.

Nachfolgend werden weitere Beispiele für eine Zielauswahl mit Hilfe der angegebenen Tabellen wiedergegeben. Die Darstellung mittels Tabelle hat den Vorteil, dass für alle Zielparameter jeweils die Menge der zur Verfügung stehenden Zeichen wiedergegeben werden kann, um die gegenseitigen Einflussmöglichkeiten deutlich aufzuzeigen. Zur Vereinfachung beschränken sich die nachfolgenden Beispiele lediglich auf die beiden Zielparameter Orts- bzw. Stadtbezeichnung und Straßenname.

**Tabelle 1**

| | | | |
|---|---|---|---|
| | | Stadt: | |
| | | Auswahl: | ABCDEFGHIJKLMNOPQRSTUVWXYZÄÖÜ |
| | | Straße: | |
| | | Auswahl: | '_123456789ABCDEFGHIJKLMNOPQRSTUVWXYZÄÖÜ |
| **1.** | Stadt: H | Stadt: | H |
| | | Auswahl: | AEIOUÄÖÜ |
| | | Straße: | |
| | | Auswahl: | 1234ABCDEFGHIJKLMNOPQRSTUVWXYZÄÖÜ |
| **2.** | Stadt: I | Stadt: | HI |
| | | Auswahl: | DLMNPRST |
| | | Straße: | |
| | | Auswahl: | ABCDEFGHIJKLMNOPQRSTUVWXYZÖÜ |
| **3.** | Stadt: L | Stadt: | HIL |
| | | Auswahl: | BCDGKLMPSTZ |
| | | Straße: | |
| | | Auswahl: | ABCDEFGHIJKLMNOPQRSTUVWXYZÖÜ |
| **4.** | Strasse: O | Stadt: | HIL |
| | | Auswahl: | BCDGLMPSTZ |
| | | Straße: | O |
| | | Auswahl: | BCDEHKLPRSTV |
| **5.** | Strasse: S | Stadt: | HIL |
| | | Auswahl: | CDGLT |
| | | Straße: | OS |
| | | Auswahl: | KNT |
| **6.** | Strasse: K | Stadt: | HILDE |
| | | Auswahl: | RS |
| | | Straße: | OSKAR-S |
| | | Auswahl: | CE |
| **7.** | Strasse: < | Stadt: | HIL |
| | | Auswahl: | CDGLT |
| | | Straße: | OS |
| | | Auswahl: | KNT |
| **8.** | Strasse: T | Stadt: | HIL |
| | | Auswahl: | CDGLT |
| | | Straße: | OST |
| | | Auswahl: | AEPRST |
| **9.** | Strasse: P | Stadt: | HILDESHEIM |
| | | Auswahl: | |
| | | Straße: | OSTPREUSSENSTRASSE |
| | | Auswahl: | |

In der Tabelle 1 ist als Beispiel die Auswahl der Ostpreussenstrasse in Hildesheim dargestellt. Es werden untereinander die einzelnen Eingabeschritte aufgezeigt. Für jeden Eingabeschritt wird angegeben, für welchen Zielparameter welches Zeichen eingegeben wird. Ferner werden bei jedem Eingabeschritt für jeden Zielparameter die bisher vorgenommene Zeicheneingabe und direkt darunter die für eine weitere Eingabe möglichen Zeichen aufgelistet.

Der ersten Tabellenzeile ist der Zustand zu entnehmen, in dem noch keine Eingabe erfolgt ist. Daher sind sowohl für den Zielparameter Stadt als auch für den Zielparameter Straße alle Zeichen auswählbar. Da in Deutschland Straßennamen mit Ziffern beginnen können, sind Ziffern für die Straße zugelassen. Im ersten Eingabeschritt wird der Buchstabe "H" für die Stadt eingegeben. Dies reduziert die mögliche Auswahl für den zweiten Buchstaben des Stadtnamens auf die Vokale und die Umlaute. Gleichzeitig findet für die Straßenbezeichnung eine Reduzierung der Zeichenauswahl statt. Durch die Eingabe der weiteren Buchstaben "I" und "L" für die Stadt findet jeweils eine Anpassung der Zeichenauswahl statt.

Im nun folgenden vierten Eingabeschritt wird zur Eingabe des Zeichens "O" für die Straße gewechselt. Mit der Eingabe des zweiten Buchstabens "S" für die Straße ist die Zeichenauswahl für die Fortsetzung bei beiden Zielparametern deutlich reduziert.

Durch den nächsten, sechsten Eingabeschritt wird gezeigt, dass bei Eingabe des Buchstabens "K" für die Straße bei beiden Zielparametern jeweils eine Zeichenkette ergänzt wird. Aus der bisherigen Stadteingabe "HIL" wurde "HILDE" und aus der Straßenbezeichnung "OS" wurde statt "OSK" direkt "OSKAR-S". Ferner wurden die Auswahlzeichen bei beiden Zielparametern der neuen Situation angepasst.

Der siebte Eingabeschritt deutet durch die nach links gerichtete Spitze eine Rücknahme der letzten Eingabe in der Straßenbezeichnung an. Der Buchstabe "K" wird somit zurückgenommen. Die dargestellte Situation ist nun wieder die gleiche, wie nach dem fünften Eingabeschritt. Die im sechsten Eingabeschritt ergänzten Zeichenketten wurden ebenfalls bei beiden Zielparametern zurückgesetzt. Die Situation nach der Zurücknahme im siebten Eingabeschritt ist nicht unterscheidbar von der Situation nach dem fünften Eingabeschritt. Eine nochmalige Rücknahme einer Zeicheneingabe bei der Straße würde zu der Situation führen, die nach dem vierten Eingabeschritt erreicht wurde.

Durch den achten und neunten Eingabeschritt zur Ergänzung der Straße ist eine eindeutige Zielauswahl erfolgt. Der neunte Eingabeschritt ergänzt bei beiden Zielparametern automatisch die fehlenden Zeichenketten bis zur vollständigen Bezeichnung der jeweiligen Zielparameter.

In der Tabelle 2 ist ein Beispiel für den Wechsel der Zeicheneingabe zur Listenauswahl angegeben. Das gezeigte Beispiel beginnt mit einer bereits eingegebenen Zeichenkette für den Zielparameter Straße.

**Tabelle 2**

| | | |
|---|---|---|
| Strasse: H | Stadt: | |
| | Auswahl: | MW |
| | Straße: | KUDLICH |
| | Auswahl: | _S |
| Eingabe: ? | Auswahl: | |
| | Stadt: | MEMMINGEN |
| | Straße: | KUDLICHSTRASSE |
| | Stadt: | MERLING |
| | Straße: | KUDLICHSTRASSE |
| | Stadt: | WÖLLSTADT |
| | Straße: | KUDLICH SIEDLUNG |

Nachdem bereits für den Zielparameter Straße die Zeichenkette "KUDLICH" eingegeben wurde, kann die Straßenbezeichnung mit einem Leerzeichen (durch einen Unterstrich angedeutet) oder mit dem Buchstaben "S" fortgesetzt werden. Für den Zielparameter Stadt stehen als Anfangsbuchstaben des Ortsnamens die beiden Buchstaben "M" und "W" zur Verfügung.

Durch "Eingabe: ?" ist in der Tabelle der Wechsel zur Listenauswahl dargestellt. Dieser Wechsel kann beispielsweise auf einer von dem Bediener durchzuführenden Eingabe und/oder Betätigung einer Bedientaste erfolgen. Wahrscheinlich sinnvoller ist ein automatischer Wechsel zur Listenauswahl, wenn die Anzahl der möglichen Ziele einen bestimmten Wert unterschreitet. Dieser Wert kann u. a. in Abhängigkeit der Größe der Anzeige bzw. der Darstellbarkeit in der Anzeige bestimmt werden.

Die Selektivität der Straßennamen ist beispielsweise in Deutschland größer als die der Ortsbezeichnungen. Von etwa 300.000 verschiedenen Straßennamen kommen ca. 2/3 nur in einer Stadt vor. In der Tabelle 3 sind Beispiele für die Anzahl der Eingabeschritte für verschiedene Adressen gezeigt, die diesen Unterschied der Selektivität aufzeigen. Aber auch ein Wechsel zwischen Zielparametern bei der Eingabe bewirkt eine Reduzierung der Anzahl der erforderlichen Eingabeschritte, bis das Ziel eindeutig festgelegt ist. Auch dies wird in der Tabelle 3 gezeigt.

**Tabelle 3**

| Adresse | Eingabe ohne Wechselwirkung | Eingabe mit Wechselwirkung und Eingabeart: | | | |
|---|---|---|---|---|---|
| | | Vollständig Ort-Straße | Vollständig Straße-Ort | Abwechselnd Ort-Straße | Abwechselnd Straße-Ort |
| Hildesheim Bahnhofsallee | 17 | 13 | 13 | 13 | 11 |
| Braunschweig Köterei | 15 | 8 | 7 | 7 | 7 |
| Pforzheim Bäznerstrasse | 9 | 8 | 4 | 6 | 5 |
| Creglingen Kieselallee | 11 | 8 | 8 | 7 | 6 |
| Bayreuth 99 Gärten | 8 | 7 | 2 | 2 | 2 |

Die Tabelle 3 zeigt deutlich den Unterschied der Anzahl erforderlicher Eingabeschritte ohne oder mit Wechselwirkung bzw. Verknüpfung der Zielparameter. Wenn ferner noch ein Wechsel der Eingabe zu einem anderen Zielparameter ermöglicht ist, kann die Anzahl der Eingabeschritte weiter reduziert werden.

## Patentansprüche

1. Verfahren zur Auswahl von Elementen in einem Fahrerinformations- oder einem Navigationssystem oder einem mobilen Endgerät, bei dem jedes Element aus einer Gesamtheit von Elementen durch Parameter definiert ist, **dadurch gekennzeichnet, dass** durch Eingeben einzelner Zeichen für jeweils einen Parameter eine Menge der möglichen Elemente aus der Gesamtheit der Elemente schrittweise eingeschränkt wird und dass bei dem Eingeben der Zeichen von einem Parameter zu einer Eingabe eines Zeichens für einen anderen Parameter gewechselt werden kann, unabhängig davon, ob bisherige Eingaben für andere Parameter abgeschlossen sind oder nicht und dass durch das Eingeben eines Zeichens für einen Parameter automatisch ein bzw. mehrere Folgezeichen auch bei den entstehenden Zeichenketten der anderen Parameter hinzugefügt werden, wenn als Folge der gegenseitigen Einschränkung dort ebenfalls eine Eindeutigkeit eintritt und dass bei einem Zurücknehmen der Eingabe eines Zeichens die durch das zurückgenommene Zeichen bewirkte Einschränkung der Auswahlmenge und der Zeichenkettenergänzung bei allen Parametern rückgängig gemacht wird.

2. Verfahren nach Anspruch 1, **dadurch gekennzeichnet, dass** der Nutzer nicht an eine feste Eingabereihenfolge gebunden ist.

3. Verfahren nach Anspruch 1 zur Nutzung einer Zielauswahl in einem Navigationssystem, wobei jedes Ziel aus einer Gesamtheit von Zielen durch Zielparameter definiert ist und durch Eingeben einzelner Zeichen für jeweils einen Zielparameter eine Menge der möglichen Ziele aus der Gesamtheit von Zielen schrittweise eingeschränkt wird und wobei bei dem Eingeben der Zeichen von einem Zielparameter zu einer Eingabe eines Zeichens für einen anderen Zielparameter gewechselt werden kann, unabhängig davon, ob bisherige Eingaben für andere Zielparameter abgeschlossen sind oder nicht.

4. Verfahren nach Anspruch 1, **dadurch gekennzeichnet, dass** es zur Liedauswahl auf einem mobilen Musikspeicher- und Wiedergabegerät oder Smartphone genutzt wird.

5. Verfahren nach Anspruch 1, **dadurch gekennzeichnet, dass** es zur Adressenauswahl auf einem Navigationssystem oder mobilen Endgerät genutzt wird.

6. Verfahren nach Anspruch 1, **dadurch gekennzeichnet, dass** es zur Datenbankabfrage auf einem PC oder im Internet genutzt wird.

7. Verfahren nach Anspruch 1 **dadurch gekennzeichnet, dass** für jeden Parameter eine Auswahlmenge existiert, die durch das Eingeben der Zeichen eingeschränkt wird, und die eingeschränkten Auswahlmengen mehrerer Parameter derart miteinander verknüpft werden, dass eine Einschränkung der Auswahlmenge eines Parameters die Auswahlmengen der anderen Parameter einschränkt.

8. Verfahren nach einem der vorstehenden Ansprüche, **dadurch gekennzeichnet, dass** für die im Zuge der mitlaufenden Einschränkung schließlich ausgewählten Parameter deren Verträglichkeit garantiert wird.

9. Verfahren nach einem der Ansprüche 3-8, **dadurch gekennzeichnet, dass** bei Unterschreitung einer vorbestimmten Anzahl der möglichen Ziele diese in einer Auflistung angezeigt werden.

10. Verfahren nach einem der vorstehenden Ansprüche, **dadurch gekennzeichnet, dass** bei einer Auflistung die verträglichen Kombinationen der genutzten Parametergruppe angezeigt werden.

11. Verfahren nach einem der Ansprüche 3-10 **dadurch gekennzeichnet, dass** die Zielparameter bei einem Navigationssystem eine Staatsbezeichnung, ein Stadtname, ein Straßenname, eine Hausnummer, eine Postleitzahl, eine Telefon- Vorwahl und/oder eine Telefonnummer sind.

12. Verfahren nach einem der vorstehenden Ansprüche, **dadurch gekennzeichnet, dass** die Parameter bei einem mobilen Endgerät eine Adresse, ein Lied, ein Interpret, ein Künstler, ein Videotitel, ein Foto, eine E-Mail, ein Buchtitel, ein Hersteller und/oder ein Medikament sind.

13. Fahrerinformations- oder Navigationssystem oder mobiles Endgerät zur Durchführung des Verfahrens nach einem der vorhergehenden Ansprüche mit einer Eingabeeinrichtung zur Eingabe von Zeichen, einem Speicher, in dem eine Gesamtheit von Elementen gespeichert sind, wobei den oder einer Mehrzahl von Elementen jeweils mindestens zwei Parameter zugeordnet sind, und einer Steuerung, die dazu ausgebildet ist, beim Eingeben einzelner Zeichen für jeweils einen Parameter eine Menge der möglichen Elemente aus der Gesamtheit der Elemente schrittweise einzuschränken und die es ermöglicht, bei dem Eingeben der Zeichen von einem Parameter zu einer Eingabe eines Zeichens für einen anderen Parameter zu wechseln, unabhängig davon, ob bisherige Eingaben für andere Parameter abgeschlossen sind oder nicht und die es ermöglicht, dass durch das Eingeben eines Zeichens für einen Parameter automatisch ein bzw. mehrere Folgezeichen auch bei den entstehenden Zeichenketten der anderen Parameter hinzugefügt werden, wenn als Folge der gegenseitigen Einschränkung dort ebenfalls eine Eindeutigkeit eintritt, und die es ermöglicht, bei einem Zurücknehmen der Eingabe eines Zeichens die durch das zurückgenommene Zeichen bewirkte Einschränkung der Auswahlmenge und der Zeichenkettenergänzung bei allen Parametern rückgängig zu machen.

## Claims

1. Method for selecting elements in a driver information system or a navigation system or a mobile terminal, in which each element from a sum total of elements is defined by parameters, **characterized in that** inputting individual characters for a respective parameter restricts a set of the possible elements from the sum total of the elements in steps and **in that** the input of the characters from one parameter can involve changing to an input of a character for another parameter, regardless of whether or not previous inputs for other parameters have concluded, and **in that** the input of a character for one parameter automatically adds one or more subsequent characters even in the case of the emerging character strings for the other parameters if, as a result of the reciprocal restriction, an unambiguity likewise occurs there, and **in that** withdrawal of the input of a character involves the restriction of the selection set and of the character string addition that was prompted by the withdrawn character being reversed for all parameters.

2. Method according to Claim 1, **characterized in that** the user is not tied to a fixed input order.

3. Method according to Claim 1 for using a destination selection in a navigation system, wherein each destination from a sum total of destinations is defined by destination parameters, and inputting individual characters for a respective destination parameter restricts a set of the possible destinations from the sum total of destinations in steps, and wherein the input of the characters from one destination parameter can involve changing to an input of a character for another destination parameter, regardless of whether or not previous inputs for other destination parameters have concluded.

4. Method according to Claim 1, **characterized in that** it is used for song selection on a mobile music storage and playback device or smartphone.

5. Method according to Claim 1, **characterized in that** it is used for address selection on a navigation system or mobile terminal.

6. Method according to Claim 1, **characterized in that** it is used for database querying on a PC or on the Internet.

7. Method according to Claim 1, **characterized in that** for each parameter, a selection set exists that is restricted by the input of the characters, and the restricted selection sets for multiple parameters are combined with one another such that a restriction for the selection set for one parameter restricts the selection sets for the other parameters.

8. Method according to one of the preceding claims, **characterized in that** compatibility is guaranteed for the parameters finally selected in the course of the accompanying restriction.

9. Method according to one of Claims 3-8, **characterized in that** a drop below a predetermined number of possible destinations prompts the latter to be displayed in a list.

10. Method according to one of the preceding claims, **characterized in that** a list displays the contractual combinations for the parameter group used.

11. Method according to one of Claims 3-10, **characterized in that** the destination parameters in the case of a navigation system are a country name, a city name, a road name, a house number, a postcode, a telephone dialling code and/or telephone number.

12. Method according to one of the preceding claims, **characterized in that** the parameters in the case of a mobile terminal are an address, a song, a performer, an artist, a video title, a photograph, an email, a book title, a manufacturer and/or a medicine.

13. Driver information or a navigation system or mobile terminal for performing the method according to one of the preceding claims, having an input device for inputting characters, a memory that stores a sum total of elements, wherein the element or a plurality of elements each have at least two associated parameters, and a controller that is designed to restrict a set of the possible elements from the sum total of the elements in steps on input of individual characters for a respective parameter and that allows the input of the characters from one parameter to involve changing to an input of a character for another parameter, regardless of whether or not previous inputs for other parameters have concluded, and that allows the input of a character for one parameter to automatically add one or more subsequent characters even in the case of the emerging character strings for the other parameters if, as a result of the reciprocal restriction, an unambiguity likewise occurs there, and that allows withdrawal of the input of a character to involve the restriction of the selection set and of the character string addition that was prompted by the withdrawn character being reversed for all parameters.

## Revendications

1. Procédé de sélection d'éléments dans un système d'information du conducteur ou un système de navigation ou un terminal mobile, selon lequel chaque élément est défini par des paramètres à partir d'un ensemble d'éléments, **caractérisé en ce qu'**une quantité des éléments possibles parmi l'ensemble d'éléments est restreinte progressivement par la saisie de caractères individuels pour respectivement un paramètre, et **en ce que** lors de la saisie des caractères d'un paramètre, il est possible de passer à une saisie d'un caractère pour un autre paramètre indépendamment du fait que les saisies actuelles pour d'autres paramètres soient terminées ou non, et **en ce qu'**un ou plusieurs caractères suivants sont automatiquement ajoutés par la saisie d'un caractère pour un paramètre, même en présence des chaînes de caractères des autres paramètres, si la conséquence de la restriction mutuelle donne également lieu ici à une univocité, et **en ce que** dans le cas d'un retrait de la saisie d'un caractère, la restriction de la quantité de sélection et du complément de la chaîne de caractères provoquée par le caractère retiré est annulée pour tous les paramètres.

2. Procédé selon la revendication 1, **caractérisé en ce que** l'utilisateur n'est pas lié à une séquence de saisie fixe.

3. Procédé selon la revendication 1 pour utiliser une sélection de destination dans un système de navigation, selon lequel chaque destination parmi un ensemble de destinations est définie par des paramètres de destination et une quantité des destinations possibles parmi l'ensemble de destinations est restreinte progressivement par la saisie de caractères individuels pour respectivement un paramètre de destination et selon lequel, lors de la saisie des caractères pour un paramètre de destination, il est possible de passer à une saisie d'un caractère pour un autre paramètre de destination indépendamment du fait que les saisies actuelles pour d'autres paramètres de destination soient terminées ou non.

4. Procédé selon la revendication 1, **caractérisé en ce qu'**il est utilisé pour la sélection d'une chanson sur un appareil mobile d'enregistrement et de reproduction de musique ou un Smartphone.

5. Procédé selon la revendication 1, **caractérisé en ce qu'**il est utilisé pour la sélection d'adresse sur un système de navigation ou un terminal mobile.

6. Procédé selon la revendication 1, **caractérisé en ce qu'**il est utilisé pour l'interrogation d'une base de données sur un PC ou sur l'Internet.

7. Procédé selon la revendication 1, **caractérisé en ce que** pour chaque paramètre, il existe une quantité de sélection, laquelle est restreinte par la saisie des caractères, et les quantités de sélection restreintes de plusieurs paramètres sont combinées entre elles de telle sorte qu'une restriction de la quantité de sélection d'un paramètre restreint les quantités de sélection des autres paramètres.

8. Procédé selon l'une des revendications précédentes, **caractérisé en ce que** la compatibilité des paramètres finalement sélectionnés dans le cadre de la restriction en continu est garantie.

9. Procédé selon l'une des revendications 3 à 8, **caractérisé en ce que** lorsque le nombre de destinations possibles devient inférieur à un nombre prédéfini, celles-ci sont affichées dans une liste.

10. Procédé selon l'une des revendications précédentes, **caractérisé en ce que** lors d'un affichage dans une liste, les combinaisons compatibles du groupe de paramètres utilisés sont affichées.

11. Procédé selon l'une des revendications 3 à 10, **caractérisé en ce que** dans le cas d'un système de navigation, les paramètres de destination sont un nom d'état, un nom de ville, un nom de rue, un numéro de maison, un code postal, un préfixe téléphonique et/ou un numéro de téléphone.

12. Procédé selon l'une des revendications précédentes, **caractérisé en ce que** dans le cas d'un terminal mobile, les paramètres sont une adresse, une chanson, un interprète, un artiste, un titre de vidéo, une photo, un e-mail, un titre de livre, un fabricant et/ou un médicament.

13. Système d'information du conducteur ou de navigation ou terminal mobile destiné à mettre en oeuvre le procédé selon l'une des revendications précédentes, comprenant un dispositif de saisie servant à la saisie de caractères, une mémoire dans laquelle est enregistré un ensemble d'éléments, au moins deux paramètres étant respectivement associés aux ou à une pluralité d'éléments, et une commande qui est configurée pour, lors de la saisie des caractères individuels pour respectivement un paramètre, restreindre progressivement une quantité des éléments possibles parmi l'ensemble d'éléments, et laquelle permet, lors de la saisie des caractères pour un paramètre, de passer à une saisie d'un caractère pour un autre paramètre, indépendamment du fait que les saisies actuelles pour d'autres paramètres soient terminées ou non, et laquelle permet qu'un ou plusieurs caractères suivants soient automatiquement ajoutés par la saisie d'un caractère pour un paramètre, même en présence des chaînes de caractères des autres paramètres, si la conséquence de la restriction mutuelle donne également lieu ici à une univocité, et laquelle permet, dans le cas d'un retrait de la saisie d'un caractère, d'annuler pour tous les paramètres la restriction de la quantité de sélection et du complément de la chaîne de caractères provoquée par le caractère retiré.
